(19) Europäisches Patentamt / European Patent Office / Office européen des brevets

(11) **EP 4 411 471 A1**

(12) **EUROPEAN PATENT APPLICATION**
published in accordance with Art. 153(4) EPC

(43) Date of publication:
**07.08.2024 Bulletin 2024/32**

(21) Application number: **22873151.9**

(22) Date of filing: **20.09.2022**

(51) International Patent Classification (IPC):
*G02F 1/137* (2006.01)　　　*G02F 1/1337* (2006.01)
*G02B 5/30* (2006.01)

(52) Cooperative Patent Classification (CPC):
**G02B 5/30; G02F 1/1337; G02F 1/137**

(86) International application number:
**PCT/KR2022/014006**

(87) International publication number:
**WO 2023/048446 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2021 KR 20210127373**

(71) Applicant: Dongwoo Fine-Chem Co., Ltd.
**Iksan-si, Jeollabuk-do 54631 (KR)**

(72) Inventors:
• KIM, Sung-Su
**Pyeongtaek-si, Gyeonggi-do 17802 (KR)**
• AHN, Hong-Jun
**Seoul 06593 (KR)**
• OH, Pyoung-Yun
**Pyeongtaek-si, Gyeonggi-do 17809 (KR)**
• BAEK, Sung-Ho
**Pyeongtaek-si, Gyeonggi-do 18031 (KR)**

(74) Representative: **Betten & Resch
Patent- und Rechtsanwälte PartGmbB
Maximiliansplatz 14
80333 München (DE)**

(54) **OPTICAL LAMINATE, METHOD FOR MANUFACTURING SAME, SMART WINDOW COMPRISING SAME, AND VEHICLE AND BUILDING WINDOWS AND DOORS USING SAME**

(57) The present invention relates to a variable transmittance optical laminate, a method for manufacturing same, a smart window comprising same, and vehicle and building windows and doors using same, the variable transmittance optical laminate comprising: a first polarizing plate including a first polarizer; a first transparent conductive layer formed on one surface of the first polarizing plate; a second polarizing plate which faces the first polarizing plate and includes a second polarizer; a second transparent conductive layer which is formed on one surface of the second polarizing plate and faces the first transparent conductive layer; and a liquid crystal layer provided between the first transparent conductive layer and the second transparent conductive layer, wherein at least one of the first polarizing plate or the second polarizing plate includes a retardation layer, the in-plane retardation value of the retardation layer is 230 nm to 280 nm, and the contained angle between the optical axis of the retardation layer and the alignment axis of the liquid crystal layer is 43° to 47°.

FIG. 1

## Description

### Technical Field

The present disclosure relates to a variable transmittance optical stack, a method for manufacturing the same, a smart window including the same, and windows and doors for a vehicle and a building using the same.

### Background Art

In general, there are many cases in which an external light blocking coating is applied to a window of a means of transportation such as a vehicle. However, a transmittance of a conventional window of a means of transportation is fixed, and a transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing a transmittance of light when a voltage is applied has been developed.

For example, Japan Patent Publication Application No. 2018-010035 discloses a variable transmittance optical stack driven as liquid crystal is driven by applying voltage to vary a transmittance.

However, the variable transmittance optical stack still has a problem in that light blocking performance is insufficient in a light blocking mode.

Therefore, the variable transmittance optical stack having improved light blocking performance in the light blocking mode needs to be developed.

### Disclosure

### Technical Problem

The present disclosure is intended to provide a variable transmittance optical stack having improved light blocking performance in a light blocking mode by adjusting a retardation of a retardation layer.

Another objective of the present disclosure is to provide a variable transmittance optical stack having improved light blocking performance in a light blocking mode by adjusting an optical axis of a retardation layer and an alignment axis of a liquid crystal layer with a predetermined contained angle therebetween.

Yet another objective of the present disclosure is to provide a variable transmittance optical stack having improved light blocking performance in a light blocking mode by adjusting an alignment axis of a liquid crystal layer and an absorbing axis of a polarizer with a predetermined contained angle therebetween.

Still another objective of the present disclosure is to provide a variable transmittance optical stack having a simplified manufactured process without a separate or additional substrate for forming a conductive layer.

Still another objective of the present disclosure is to provide a variable transmittance optical stack having a thickness significantly reduced without a separate or additional substrate for forming a conductive layer.

Still another objective of the present disclosure is to provide a variable transmittance optical stack having an improved transmittance in a light transmissive mode without a separate or additional substrate for forming a conductive layer.

Still another objective of the present disclosure is to provide a smart window including the variable transmittance optical stack, and windows and doors for a vehicle or a building to which the same is applied.

However, the problem to be solved by the present disclosure is not limited to the problems mentioned above, and other problems not mentioned will be clearly understood by those skilled in the art from the description below.

### Technical Solution

The present disclosure relates to a variable transmittance optical stack including: a first polarizing plate including a first polarizer; a first transparent conductive layer formed on one surface of the first polarizing plate; a second polarizing plate opposing the first polarizing plate, and including a second polarizer; a second transparent conductive layer formed on one surface of the second polarizing plate, and opposing the first transparent conductive layer; and a liquid crystal layer provided between the first transparent conductive layer and the second transparent conductive layer, wherein at least one polarizing plate of the first polarizing plate and the second polarizing plate may include a retardation layer, and an in-plane retardation value of the retardation layer may range from 230 to 280nm, and an optical axis of the retardation layer may have a contained angle ranging from 43° to 47° with respect to an alignment axis of the liquid crystal layer.

In a first aspect of the present disclosure, the alignment axis of the liquid crystal layer may have a contained angle ranging from 20° to 25°, with respect to an absorbing axis or a transmissive axis of at least one polarizer of the first polarizer and the second polarizer.

In a second aspect of the present disclosure, an absorbing axis of the first polarizer and an absorbing axis of the second polarizer may be parallel to each other.

In a third aspect of the present disclosure, the liquid crystal layer may be driven in a vertical alignment (VA) mode.

In a fourth aspect of the present disclosure, the retardation layer may be formed on an inner surface of at least one polarizer of the first polarizer and the second polarizer.

In a fifth aspect of the present disclosure, at least one transparent conductive layer of the first transparent conductive layer and the second transparent conductive layer may be formed by directly contacting with at least one polarizing plate of the first polarizing plate and the second polarizing plate.

In a sixth aspect of the present disclosure, at least one transparent conductive layer of the first transparent conductive layer and the second transparent conductive layer may be formed by directly contacting with any one polarizing plate of the first polarizing plate and the second polarizing plate without a separate or additional substrate between the polarizing plate and the transparent conductive layer.

In a seventh aspect of the present disclosure, at least one transparent conductive layer of the first transparent conductive layer and the second transparent conductive layer may be formed by directly contacting with any one polarizing plate of the first polarizing plate and the second polarizing plate with a highly adhesive layer between the polarizing plate and the transparent conductive layer.

In an eighth aspect of the present disclosure, at least one transparent conductive layer of the first transparent conductive layer and the second transparent conductive layer may include one or more types selected from a group consisting of transparent conductive oxide, metal, carbonaceous material, conductive polymers, conductive ink, and nanowires.

In a ninth aspect of the present disclosure, at least one polarizing plate of the first polarizing plate and the second polarizing plate may include one or more types of functional layers selected from a group consisting of a protective layer and a refractive index-matching layer.

In a tenth aspect of the present disclosure, at least one polarizing plate of the first polarizing plate and the second polarizing plate may have a thickness ranging from 30 to 200 $\mu$m.

In an eleventh aspect of the present disclosure, the liquid crystal layer may include one or more types selected from a group consisting of a ball spacer and a column spacer.

In a twelfth aspect of the present disclosure, the ball spacer may have a diameter ranging from 1 to 10 $\mu$m.

In a thirteenth aspect of the present disclosure, an occupancy area of the ball spacer in the liquid crystal layer may range from 0.01 to 10% of the area of the liquid crystal layer.

In a fourteenth aspect of the present disclosure, the variable transmittance optical stack may include one or more types selected from a group consisting of an alignment film, a pressure sensitive adhesive/adhesive layer, an ultraviolet ray absorption layer, and a hard coating layer.

The present disclosure relates to a manufacturing method for the variable transmittance optical stack.

The present disclosure relates to a smart window comprising the variable transmittance optical stack.

The present disclosure relates to a vehicle in which the smart window is applied to at least one of a front window, a rear window, a side window, a sunroof window, and an inner partition thereof.

The present disclosure relates to a window and a door for a building including the smart window.

**Advantageous Effects**

According to the present disclosure, the light blocking performance of the variable transmittance optical stack in the light blocking mode can be improved in comparison to the conventional optical stack by appropriately adjusting a retardation of the retardation layer.

The light blocking performance of the variable transmittance optical stack according to the present disclosure in the light blocking mode can be improved in comparison to the conventional optical stack, by adjusting the optical axis of the retardation layer and the alignment axis of the liquid crystal layer with a predetermined contained angle therebetween.

The light blocking performance of variable transmittance optical stack according to the present disclosure in the light blocking mode can be improved in comparison to the conventional optical stack, by adjusting the alignment axis of the liquid crystal layer and the absorbing axis of the polarizer with a predetermined contained angle therebetween.

The variable transmittance optical stack according to the present disclosure can have the manufacturing process simplified in comparison to the conventional optical stack by omitting the process of forming a conductive layer on a separate or additional substrate for forming the conventional optical stack and bonding the conductive layer and other members.

The thickness of the variable transmittance optical stack according to the present disclosure can be significantly reduced in comparison to the thickness of the conventional optical stack, without a separate or additional substrate for forming the conductive layer as the conductive layer is directly formed on one surface of the polarizing plate.

The transmittance of the variable transmittance optical stack according to the present disclosure in the light transmissive mode can be improved in comparison to the thickness of the conventional optical stack, without a separate or additional substrate for forming the conductive layer as the conductive layer is directly formed on one surface of the polarizing plate.

## Description of Drawings

FIG. 1 is a view showing a stack structure of a variable transmittance optical stack according to an embodiment of the present disclosure.

FIGS. 2A to 2C are views each showing a stack structure of a polarizing plate according to one or a plurality of embodiments of the present disclosure.

FIG. 3 is a view showing an absorbing axis and a transmissive axis of a roll-shaped raw film providing a polarizer according to an embodiment of the present disclosure.

FIGS. 4A and 4B are views showing relationship between the alignment axis of the liquid crystal layer and the optical axis of the retardation layer or the absorbing axis of the polarizer according to an embodiment of the present disclosure.

FIGS. 5A and 5B are views each showing a stack structure of a variable transmittance optical stack according to another embodiment of the present disclosure.

## Best Mode

The present disclosure relates to a variable transmittance optical stack including a retardation layer. Specifically, the present disclosure relates to a variable transmittance optical stack capable of increasing light blocking performance in a light blocking mode by adjusting a retardation and an optical axis of a retardation layer.

More specifically, the present disclosure relates to a variable transmittance optical stack including: a first polarizing plate including: a first polarizer; a first transparent conductive layer formed on one surface of the first polarizing plate; a second polarizing plate opposing the first polarizing plate, and including a second polarizer; a second transparent conductive layer formed on one surface of the second polarizing plate, and opposing the first transparent conductive layer; and a liquid crystal layer provided between the first transparent conductive layer and the second transparent conductive layer, wherein at least one polarizing plate of the first polarizing plate and the second polarizing plate includes a retardation layer, and an in-plane retardation value of the retardation layer ranges from 230 to 280nm, and an optical axis of the retardation layer has a contained angle ranging from 43° to 47° with respect to an alignment axis of the liquid crystal layer.

The variable transmittance optical stack of the present disclosure is particularly suitable for technical fields where a light transmittance can be changed in response to application of voltage, for example, may be used for a smart window, etc.

In the present disclosure, the smart window is an optical structure controlling the amount of light or heat passing through the window by changing a light transmittance in response to an electrical signal, and the present disclosure is not limited thereto. In other words, the smart window is provided to be changed into a transparent, opaque or translucent state by voltage and conceptually includes variable transmittance glass, lighting control glass, or smart glass.

A smart window may be used as a partition for partitioning the internal space of a vehicle and a building or as a partition for privacy, and may be used as a skylight window arranged at an opening of a building. Furthermore, the smart window may be used as highway signs, notice boards, score boards, clocks or advertisement screens, and may be used to replace windows of vehicles, buses, airplanes, ships, or trains, or a glass window of means of transportation, such as a sunroof.

The variable transmittance optical stack according to the embodiment of the present disclosure may also be used as the smart window of the above-described various technology fields., and the conductive layer can be directly formed on the polarizing plate without a separate or additional substrate for forming the transparent conductive layer, so that the variable transmittance optical stack is thin in thickness and is advantageous in the curve characteristic. Therefore, the variable transmittance optical stack according to the embodiment of the present disclosure may be used appropriately for a smart window for a vehicle or a building. According to one or a plurality of embodiments, the smart window to which the variable transmittance optical stack of the present disclosure is applied may be used for front windows, rear windows, side windows, and sunroof windows of a vehicle, or windows and doors for a building, and the smart window may be used to not only an external light blocking use, but also an internal space partitioning use or a privacy protecting use such as an inner partition for a vehicle or a building.

Hereinbelow, embodiments of the present disclosure will be described in detail with reference to drawings. However, the following drawings accompanying this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus do not limit the present disclosure. In this specification, an element expressed in a singular form may be plural elements unless it is necessarily singular in the context. For example, "the polarizing plate" used in the specification may mean at least one polarizing plate of the first polarizing plate and the second polarizing plate, and "the polarizer" may mean at least one polarizer of the first polarizer and the second polarizer, and "the transparent conductive layer" may mean at least one transparent conductive layer of the first transparent conductive layer and the second transparent conductive layer.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", "lower portion", "above", "upper surface", "upper portion" may be used to easily describe the correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" concerning another element may be placed "on" the another element. Accordingly, the exemplary term "below" may include both downward and upward directions. An element may be aligned in a different direction, and accordingly, the spatially relative terms may be interpreted according to alignment.

The "planar direction" used in this specification may be interpreted as a direction perpendicular to a polarizing plate and/or a transparent conductive layer, that is, a direction viewed from the user's view side.

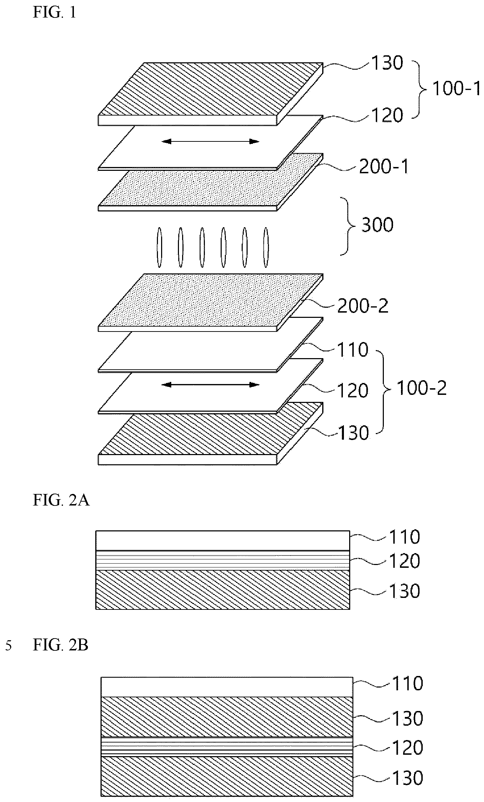

FIG. 1 is a view showing a stack structure of a variable transmittance optical stack according to an embodiment of the present disclosure. FIGS. 2A to 2C are views each showing a stack structure of a polarizing plate according to one or a plurality of embodiments of the present disclosure.

Referring to FIG. 1, the variable transmittance optical stack according to the embodiment of the present disclosure includes a first polarizing plate 100-1, a second polarizing plate 100-2, a first transparent conductive layer 200-1, a second transparent conductive layer 200-2, and a liquid crystal layer 300.

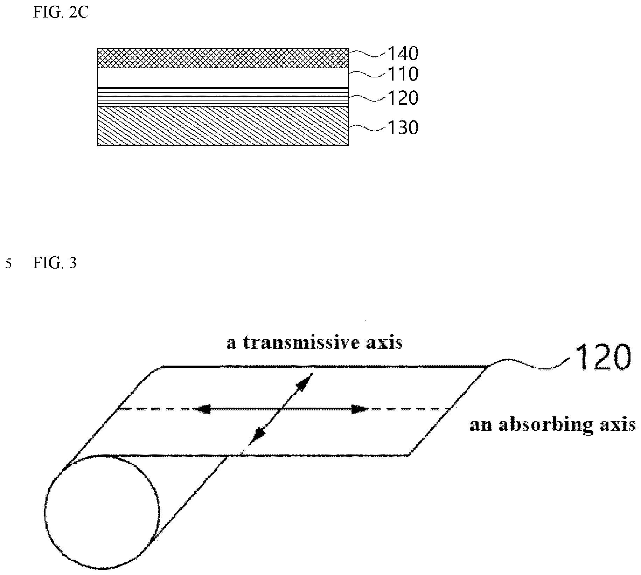

Referring to FIGS. 1 to 2C, a polarizing plate 100 includes a retardation layer 110 and a polarizer 120, and functional layers such as a protective layer 130 and a refractive index-matching layer 140 may be included on one surface or opposite surfaces of the polarizer 120. For example, the polarizing plate 100 may be a plate formed by successively stacking the retardation layer 110, the polarizer 120, and the protective layer 130 (referring to FIG. 2A), and may be a plate formed by successively stacking the retardation layer 110, the protective layer 130, the polarizer 120, and the protective layer 130 (referring to FIG. 2B), and may be a plate formed by successively stacking the refractive index-matching layer 140, the retardation layer 110, the polarizer 120, and the protective layer 130 (referring to FIG. 2C).

The retardation layer 110 may be provided to complement optical properties of the optical stack, and may be implemented in a retardation film, and a retardation film currently developed or to be developed may be used therefor. For example, a quarter-wave plate (1/4 wave plate) or a half-wave plate (1/2 wave plate) may be used to delay a retardation of light and may be used alone or in combination.

As shown in FIGS. 2A and 2C, the retardation layer 110 may be formed by directly contacting with one surface of the polarizer 120 but is not limited thereto. For example, as shown in FIG. 2B, the retardation layer 110 is formed on one surface of the protective layer 130, and the retardation layer 110, the protective layer 130, the polarizer 120, and the protective layer 130 may be successively stacked.

The retardation layer 110 is preferably formed on one surface in a direction toward a liquid crystal layer 300 based on the polarizer 120, i.e., on an inner surface of the polarizer 120. In this case, the optical property of light passing through the polarizer 120 is changed to derive the advantage in improvement of the light blocking performance in the light blocking mode of the optical stack.

The retardation layer 110 may be a polymer stretched film or a liquid crystal polymerized film, formed by stretching a polymer film that can impart optical anisotropy by stretching in an appropriate manner.

According to the embodiment, the polymer stretched film may use a polymer layer containing polyolefin such as polyethylene (PE), polypropylene (PP), etc., cyclo olefin polymer (COP) such as polynorbornene, etc., polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers.

A method for obtaining the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using a common solvent, for example, a solvent such as chloroform, 2 methylene chloride, etc., and then are solidified in a cast dry manner, and accordingly, the non-stretched film may be cast-molded.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain a reactive liquid crystal compound in a polymerized state. The reactive liquid crystal compound may mean a compound, for example, containing a mesogen frame, etc., and also containing one or more polymerizable functional groups. The reactive liquid crystal compound may be variously known by the name reactive mesogen (RM). The reactive liquid crystal compound may constitute a cured film with a polymer network formed while being polymerized by light or heat and maintaining a liquid crystal arrangement.

The reactive liquid crystal compound may be a mono-functional liquid crystal compound or a multi-functional liquid crystal compound. The mono-functional liquid crystal compound is a compound having 1 polymerizable functional group, and a multi-functional liquid crystal compound may mean a compound having two or more polymerizable functional groups.

An in-plane retardation value of the retardation layer 110 may range from 230 to 280nm. When the in-plane retardation of the retardation layer 110 satisfies the above range, the light blocking performance in the light blocking mode of the optical stack may be improved.

The in-plane retardation value may be calculated by the follow equation 1.

**[Equation 1]**

$$R_{in} = |nx - ny| \times d$$

In the equation 1, $R_{in}$ is in-plane retardation, nx and ny are respectively a refractive index in an x-axial direction of the retardation layer and a refractive index in a y-axial direction thereof, and d is a thickness of the retardation layer. These definitions may be equally applied in the specification unless otherwise specified.

In the above description, the x-axial direction may mean an in-plane slow direction of the retardation layer, the y-axial direction may mean an in-plane fast direction perpendicular to the x axis, and the z-axial direction may mean a normal direction of a plane formed by the x axis and the y axis, for example, the thickness direction of the retardation layer. In the specification, the slow axis may mean an axis in parallel to a direction with highest reflective index based on a planar direction of the retardation layer. Unless specifically specified otherwise when referring to the refractive index in this specification, the refractive index is a refractive index for light with a wavelength of about 550 nm.

As the method for adjusting the in-plane retardation of the retardation layer, methods commonly used in the industry can be applied, for example, when the retardation layer is the polymer stretched film, a value of the in-plane retardation may be adjusted by adjusting material, thickness, stretching ratio, etc. In another embodiment, when the retardation layer is a liquid crystal polymerized film, a value of the in-plane retardation may be adjusted by adjusting thickness, a double refractive value of the liquid crystal.

In one or a plurality of embodiments, the thickness of the retardation layer 110 may range from 10μm to 100μm in the polymer stretched film and may range from 0.1μm to 5μm in the liquid crystal polymerized film.

The polarizer 120 may use a polarizer currently developed or to be developed, and, for example, may use a stretched polarizer, a coatable polarizer, etc.

According to the embodiment, the stretched polarizer may contain a stretched polyvinyl alcohol (PVA)-based resin. The PVA-based resin may be PVA-based resin obtained by saponifying polyvinyl acetate resin. In addition to polyvinyl acetate that is homopolymer of vinyl acetate, vinyl acetate and a copolymer with other monomers that can be copolymerized with vinyl acetate may be used as the polyvinyl acetate-based resin. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin contains a denatured resin, and for example, may be polyvinyl formal or polyvinyl acetal denatured into aldehyde.

According to the embodiment, the coatable polarizer may be formed of a composition for liquid crystal coating, and, at this point, the composition for liquid crystal coating may contain reactive liquid crystal compound, and dichroic dye, etc.

The reactive liquid crystal compound is not particularly limited as long as it can have the polarization property, and may use a reactive liquid crystal compound that is currently developed or to be developed later, and for example, the contents about the reactive liquid crystal compound of the retardation layer above described may be equally applied thereto.

The dichroic dye is a substance contained in the composition for liquid crystal coating to impart the polarization characteristic and has a property in which absorbance in a direction of the long axis of a molecule and absorbance in a direction of the short axis are different. The dichroic dyes may be dichroic dyes currently developed or to be developed and may contain one or more types of dyes selected from a group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, and the like may be used. Furthermore, the composition for liquid crystal coating may contain leveling agents, a polymerization initiator, etc. within a range that does not deteriorate the polarization properties of a coating film.

According to the embodiment, an absorbing axis of the first polarizer and an absorbing axis of the second polarizer may be arranged in parallel to each other. In this case, the absorbing axis and a machine direction (MD) of the polarizer are parallel to each other, so that the arrangement may be advantageous for enlarging the variable transmittance optical stack.

Specifically, FIG. 3 is a view showing an absorbing axis and a transmissive axis of a roll-shaped raw film providing a polarizer according to an embodiment of the present disclosure.

Referring to FIG. 3, the polarizer according to the embodiment of the present disclosure may be manufactured by the roll-to-roll process, and the roll-to-roll process uses a roll-shaped raw film in which the MD of the polarizer is parallel to the absorbing axis of the polarizer and a transverse direction (TD) is parallel to a transmissive axis of the polarizer.

At this point, when absorbing axes of two different polarizing plates are parallel to each other, according to needs of a user, two polarizers having predetermined MD lengths may be efficiently manufactured and enlargement of the optical stack may be advantageous.

The protective layer 130 is provided to preserve the polarization characteristic of the polarizer 120 from a post-processing and external environment and may be implemented into a form such as a protective film, etc.

As shown in FIGS. 2A to 2C, the protective layer 130 may be formed by directly contacting with one or both surfaces of the polarizer 120 but is not limited thereto. For example, the protective layer may be used as a double-layer structure in which one or more protective layers are successively stacked and may be formed in direct contact with another functional layer.

According to one or a plurality of embodiments, the protective layer 130 may contain one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The refractive index-matching layer 140 is provided to compensate for the refractive index difference of the optical stack by the transparent conductive layer 200, and may serve to improve the visible characteristic by reducing the difference of the refractive index. Furthermore, the refractive index-matching layer 140 may be provided to correct a color based on the transparent conductive layer 200. Meanwhile, when the transparent conductive layer has a pattern, the refractive index-matching layer 140 may correct the transmittance difference of a region with the pattern and a non-pattern region without the pattern.

Specifically, the transparent conductive layer 200 is stacked close to other members having a refractive index different therefrom (for example, the polarizer 120, etc.), and due to the difference of the refractive index between the transparent conductive layer and another layer close thereto, the difference of an optical transmittance may be caused.

Specifically, when the pattern is formed on the transparent conductive layer, there may be a problem in that the pattern region and the non-pattern region are visually distinguished from each other. Therefore, the refractive index-matching layer 140 is included to compensate for a refractive index, thereby reducing the difference with the optical transmittance of the optical stack. Specifically, when a pattern is formed on the transparent conductive layer, the pattern region and the non-pattern region should be provided so as not to be visually distinguished.

According to the embodiment, the refractive index of the refractive index-matching layer 140 may be appropriately selected according to a material of another adjacent member and may preferably range from 1.4 to 2.6, more preferably may range from 1.4 to 2.4. In this case, it is possible to prevent optical loss due to a sharp difference in the refractive index between another member such as the polarizer 120 and the transparent conductive layer 200.

The refractive index-matching layer 140 is not particularly limited as long as it can prevent the sharply refractive difference between other members, such as the polarizer 120, etc., and the transparent conductive layer, and may use a compound used in the formation of a refractive index-matching layer currently developed or to be developed. For example, the refractive index-matching layer 150 may be formed from refractive index-matching layer formation composition containing polymerizable isocyanate compound.

According to the embodiment, the polarizing plate 100 may include other functional layers to assist or strengthen the characteristics of the polarizer in addition to the above-mentioned functional layers and, for example, may include an overcoat layer, etc. to further improve the mechanical durability.

According to one or a plurality of embodiments, the polarizing plate 100 may have a thickness ranging from 30 to 200 μm, and preferably, a thickness ranging from 30 to 170 μm, and more particularly, a thickness ranging from 50 to 150 μm. In this case, while the polarizing plate 100 maintains the optical characteristic, the optical stack having a thin thickness can be manufactured.

The transparent conductive layer 200 is provided to drive the liquid crystal layer 300, and may be formed by directly contacting with the polarizing plate 100. For example, as shown in FIG. 1, the first transparent conductive layer 200-1 and the second transparent conductive layer 200-2 may be respectively formed by directly contacting with the first polarizing plate 100-1 and the second polarizing plate 100-2.

Conventionally, an optical stack used to manufacture a smart window, etc. is manufactured by forming a conductive layer for driving a liquid crystal on one surface of a substrate and bonding-coupling a second surface of the substrate to a polarizing plate. However, according to the present disclosure, the variable transmittance optical stack has the conductive layer directly formed on one surface of the polarizing plate without a separate or additional substrate for forming the conductive layer, and thus is characterized to improve the transmittance in a light transmissive mode and the curvature characteristic while reducing the entire thickness of the stack.

According to the embodiment, the transparent conductive layer 200 may be formed by being directly deposited on one surface of the polarizing plate 100. At this point, in order to improve the adhesion between the transparent conductive layer 200 and the polarizing plate 100, the transparent conductive layer 200 may be formed by performing pre-processing such as a corona processing or a plasma processing on one surface of each polarizing plate 100, and then directly contacting with the surface of each polarizing plate 100 to which the pre-processing is performed. The pre-processing is not limited to the corona processing or the plasma processing, and may be a pre-processing currently developed or to be developed without harming the purpose of the present disclosure.

According to another embodiment of the present disclosure, in order to improve the adhesion between the transparent conductive layer 200 and the polarizing plate 100, the transparent conductive layer 200 may be formed by directly contacting with each polarizing plate with the highly adhesive layer (not shown) located therebetween, the highly adhesive layer being provided on one surface of each polarizing plate 100.

The transparent conductive layer 200 is preferably have a transmittance with respect to visible light of 50% or more, and for example, may include one or more types selected from a group consisting of transparent conductive oxide, metal, a carbonaceous material, conductive polymer, conductive ink, and nanowires, but the present disclosure is not limited thereto, and a material of a transparent conductive layer currently developed or to be developed later may be used.

According to one or a plurality of embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, may include argentum - palladium - cuprum (APC) alloy or cuprum - calcium (CuCa) alloy. The carbonaceous material may include one or more types selected from a group consisting of carbon nanotube (CNT), graphene, etc., and the conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 200 may be formed by combining these matters in a structure of two or more layers. For example, in order to reduce the reflectance of incident light and increase the transmittance, the transparent conductive layer may be formed in a structure of two layers including a metal layer and a transparent conductive oxide.

The transparent conductive layer 200 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

The liquid crystal layer 300 may adjust a transmittance of light incident in one or a plurality of directions according to electric fields to change a driving mode of the optical stack.

The liquid crystal layer 300 may include liquid crystal compounds and, for example, in an optical control region, may be located in a space provided by a sealant layer (not shown) and a spacer (not shown) that are provided between the first polarizing plate 100-1 and the second polarizing plate 100-2.

The liquid crystal compounds are driven in response to electric fields and are not particularly limited as long as they can control the transmittance of light, and liquid crystal compounds currently developed or to be developed may be used, for example, the description of reactive liquid crystal compound of the above-mentioned retardation layer may be equally applied thereto.

According to an embodiment, the liquid crystal layer 300 may be operated in a vertical alignment (VA) mode. In this case, the light blocking performance in the light blocking mode of the optical stack can be improved through optical design with the retardation layer 110 and the polarizer 120 described above.

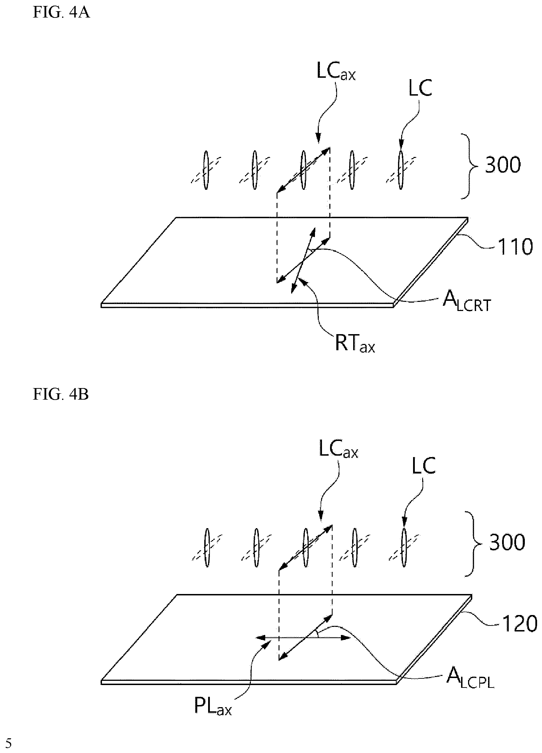

Specifically, FIGS. 4A and 4B are views showing relationship between the alignment axis of the liquid crystal layer and the optical axis of the retardation layer (referring to FIG. 4A) or and the absorbing axis of the polarizer (referring to FIG. 4B) according to an embodiment of the present disclosure.

Referring to FIG. 4A, a liquid crystal compound LC of the liquid crystal layer 300 according to the embodiment of the present disclosure may have negative dielectric anisotropy ($\Delta\varepsilon < 0$), and may be arranged to be driven in the VA mode.

The liquid crystal compound LC in an initial state to which no external electric field is applied may be arranged such that a major axis of the liquid crystal compound LC is practically parallel to a normal direction of the retardation layer 110, for example, to a thickness direction of the retardation layer 110 (homeotropic alignment).

Therefore, light passing through a lower polarizing plate (not shown) has polarization, and the light passes through the liquid crystal layer 300 while maintaining polarization, and then reaches an upper polarizing plate (not shown). At this point, when the absorbing axes of the upper polarizing plate and the lower polarizing plate are arranged in parallel to each other, polarized light reaching the upper polarizing plate passes instantly through the upper polarizing plate, and the light transmissive mode may be actuated.

Meanwhile, when different transparent conductive layers (not shown) that are arranged opposite to each other with the liquid crystal layer 300 therebetween allow a vertical electric field to be applied, the liquid crystal compound LC may be arranged such that the major axis of the liquid crystal compound LC is practically parallel to the alignment axis LCax of the liquid crystal layer.

Therefore, light passing through the lower polarizing plate has polarization, and polarization is changed while the light passes through the liquid crystal layer 300 to reach the upper polarizing plate. At this point, when the absorbing axes of the upper polarizing plate and the lower polarizing plate are arranged in parallel to each other, entire part of polarized light reaching the upper polarizing plate is blocked by the upper polarizing plate, and the light blocking mode may be actuated.

The optical stack driven as described above may be formed such that the alignment axis LCax of the liquid crystal layer has a predetermined contained angle with respect to the optical axis RTax of the retardation layer, and preferably, the predetermined contained angle ranges from 43° to 47°. When the alignment axis LCax of the liquid crystal layer and the optical axis RTax of the retardation layer have a contained angle within the above range, the optical stack can have further improved light blocking performance in the light blocking mode.

Referring to FIG. 4b, a liquid crystal compound LC of the liquid crystal layer 300 according to the embodiment of the present disclosure may have negative dielectric anisotropy ($\Delta\varepsilon < 0$), and may be arranged to be driven in the VA mode.

The liquid crystal compound LC in an initial state to which no external electric field is applied may be arranged such that a major axis of the liquid crystal compound LC is practically parallel to a normal direction of the polarizer 120, for example, to a thickness direction of the polarizer 120 (homeotropic alignment).

Therefore, light passing through the polarizer 120 provided at the lower polarizing plate has polarization, and the light passes through the liquid crystal layer 300 while maintaining polarization, and then reaches an upper polarizing plate (not shown). At this point, when the absorbing axes of the upper polarizing plate and the lower polarizing plate are arranged in parallel to each other, polarized light reaching the upper polarizing plate passes instantly through the upper polarizing plate, and the light transmissive mode may be actuated.

Meanwhile, when different transparent conductive layers (not shown) that are arranged opposite to each other with the liquid crystal layer 300 therebetween allow a vertical electric field to be applied, the liquid crystal compound LC may be arranged such that the major axis of the liquid crystal compound LC is practically parallel to the alignment axis LCax of the liquid crystal layer.

Therefore, light passing through the polarizer 120 provided at the lower polarizing plate has polarization, and polarization is changed while the light passes through the liquid crystal layer 300 to reach the upper polarizing plate. At this point, when the absorbing axes of the upper polarizing plate and the lower polarizing plate are arranged in parallel to each other, entire part of polarized light reaching the upper polarizing plate is blocked by the upper polarizing plate, and the light blocking mode may be actuated.

The optical stack driven as described above may be formed such that the alignment axis LCax of the liquid crystal layer has a predetermined contained angle with respect to the absorbing axis PLax of the polarizer of the retardation layer, and preferably, the predetermined contained angle ranges from 20° to 25°. When the alignment axis LCax of the liquid crystal layer and the absorbing axis PLax of the polarizer have a contained angle within the above range, the optical stack can have further improved light blocking performance in the light blocking mode.

Meanwhile, the exemplary embodiment of the above-described 4B illustratively shows relationship between the alignment axis of the liquid crystal layer and the absorbing axis of the polarizer, and is not necessarily limited, and may be equally applied to relationship between the alignment axis of the liquid crystal layer and the transmissive axis of the polarizer.

The sealant may contain curable resins as base resins. As the base resins, UV curable resins or heat curable resins that are known to be usable for sealants in the art may be used. The UV curable resins may be polymers of UV curable monomers. The heat-curable resins may be polymers of heat-curable monomers.

As the base resins of the sealant, for example, acrylate-based resins, epoxy-based resins, urethane-based resins, phenol-based resins, or compounds of these resins may be used. According to an embodiment, the base resins may be acrylate-based resins, and the acrylate-based resins may be polymers of acrylic monomers. For example, the acrylic monomers may be multifunctional acrylate. According to another embodiment, the sealant may contain monomer substances in addition to the base resins. For example, the monomer substances may be monofunctional acrylate. In the specification, the monofunctional acrylate may mean compounds having one acryl group, and the multifunctional acrylate may mean compounds having two or more acryl groups. The curable resins may be cured by UV irradiation and/or heating. The UV irradiation condition or heat condition may be performed appropriately within the scope that does not damage the objective of the present disclosure. In case of need, the sealant may contain an initiator, for example, an optical initiator or a heat initiator.

The sealant may be provided in a method commonly used in the art and, for example, may be formed drawing a sealant at an outer portion of the liquid crystal layer (i.e., inactivate region) with a dispenser having a nozzle.

The spacer may include one or more spacers among a ball spacer and a column spacer and, specifically, may preferably be a ball spacer. The ball spacer may include one or more ball spacers and preferably has a diameter ranged from 1 to 10μm. Furthermore, when viewed in a planar direction, a region where the ball spacer is occupied in the liquid crystal layer 300 is preferably 0.01 to 10% of the area of the liquid crystal layer 300 in an aspect of improvement of user's visibility and a transmittance in a light transmissive mode.

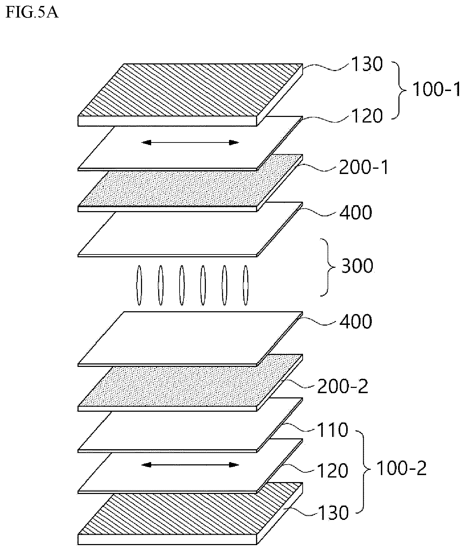

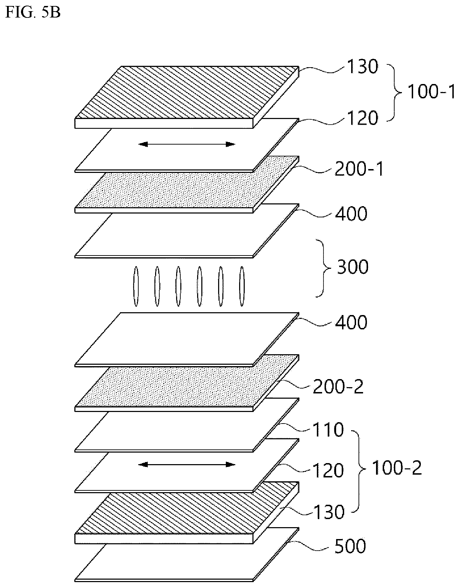

According to the embodiment, the liquid crystal layer 300 may include an alignment film 400 if necessary (referring to FIG. 5A) and, alignment films 400, for example, may be formed on opposite surfaces of the liquid crystal layer 300 including liquid crystal compounds.

The alignment film 400 is not particularly limited as long as it adds orientation to the liquid crystal compounds. For example, the alignment film 400 may be manufactured by coating and curing an alignment film coating composition containing aligned polymers, a photopolymerization initiator, and solvent. Although the aligned polymer is not particularly limited, the aligned polymer may be polyacrylate-based resin, polyamic resin, polyimide-based resin, polymer having cinnamate groups, etc. and may use polymer capable of expressing orientation, the polymer being currently developed or to be developed.

The variable transmittance optical stack of the present disclosure may include other members without affecting the objectives of the present disclosure and, for example, may include the pressure-sensitive adhesive/adhesive layer 500 (referring to 5B) and may include an ultraviolet ray absorption layer, a hard coating layer, etc.

The pressure-sensitive adhesive/adhesive layer 500 may be formed using an adhesive or a pressure-sensitive adhesive, and have appropriate pressure sensitive adhesion/adhesion to prevent peeling, bubbles, etc. from occurring when handling the optical stack, and preferably have transparency and thermal stability.

The adhesive may be an adhesive currently developed or to be developed, for example, may use photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, a photopolymerization initiator, and the like.

The reactive oligomers are important components that determine the properties of adhesive, and form polymer binding by photopolymerization to form a cured film. For example, the available oligomers may be polyester-based resin, polyether-based resin, polyurethane-based resin, epoxy-based resin, polyacryl-based resin, silicon-based resin, and the like.

The reactive monomers may serve as a crosslinker or a diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiator may absorb light energy to generate radicals or cations to initiate photopolymerization, and a proper type may be selected and used depending on photopolymerization resin.

The pressure-sensitive adhesive may use a pressure-sensitive adhesive currently developed or to be developed. According to one or a plurality of embodiments, as the pressure-sensitive adhesive, acrylic-based pressure-sensitive adhesive, rubber-based pressure-sensitive adhesive, silicon-based pressure-sensitive adhesive, urethane-based pressure-sensitive adhesive, polyvinyl alcohol-based pressure-sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like. The pressure-sensitive adhesive is not particularly limited as long as it has pressure-sensitive adhesion and viscoelasticity. For ease of acquisition, preferably, the pressure-sensitive adhesive may include acrylic-based pressure-sensitive adhesive, for example, may be (meth) acrylate copolymers, crosslinkers, solvents, and the like.

The crosslinkers may be crosslinkers currently developed or to be developed and, for example, polyisocyanate compounds, epoxy resins, melamine resins, urea resins, dialdehydes, methylol polymers, etc., and may preferably contain polyisocyanate compounds.

The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The thickness of the pressure sensitive adhesive/adhesive layer 500 may be appropriately determined depending on a type of resins serving as the pressure sensitive adhesive/adhesive, the strength of the pressure sensitive adhesive/adhesive, the environment where the pressure sensitive adhesive/adhesive is used, and the like. According to an embodiment, the pressure sensitive adhesive/adhesive layer may have a thickness ranging from 0.01 to 50 $\mu$m in order to ensure sufficient adhesion and minimize the thickness of the optical stack and, preferably, may have a thickness ranging from 0.05 to 20 $\mu$m and, more preferably, may have a thickness ranging from 0.1 to 10 $\mu$m.

The ultraviolet ray absorption layer is not particularly limited as long as it is to prevent deterioration of the optical stack due to UV rays. For example, the ultraviolet ray absorption layer may use salicylic acid-based ultraviolet absorber (phenyl salicylate, p-tert-butylsalicylate, etc.), benzophenone-based ultraviolet absorber(2,4-dihydroxybenzophenone, 2,2'-dihydroxy-4,4'-dimethoxybenzophenone, etc.), benzotriazole-based ultraviolet absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based ultraviolet absorber(2'-ethylhexyl-2-cyano-3,3-diphenylacrylate, ethyl-2-cyano-3-(3',4'-methylene dioxyphenyl)-acrylate, etc.), triazine-based ultraviolet absorber, etc.. The benzotriazole-based ultraviolet absorber or the triazine-based ultraviolet absorber that have high transparency and the excellent effect of preventing deterioration of the polarizing plate or the variable transmittance layer may be preferably used as the ultraviolet ray absorption layer, and the benzotriazole-based ultraviolet absorber having more appropriate spectral absorption spectroscopy absorption spectrum may be preferable. The benzotriazole-based ultraviolet absorber may be changed into "-Bis" and, for example, may be 6,6'-methylene bis (2-(2H-benzo[d][1,2,3]triazole-2-yl)-4-(2,4,4-trimethylpentane-2-yl)phenol), 6,6'-methylene bis (2-(2H-benzo[d][1,2,3]triazole-2-yl)-4-(2-hydroxyethyl)phenol), etc.

The hard coating layer is not particularly limited as long as it is to protect members such as the polarizing plate, the variable transmittance layer, etc. from external physical and chemical shocks, and hard coating layers currently developed or to be developed may be used thereto.

According to the embodiment, the hard coating layer may be formed by applying compositions for forming a hard coating layer on another member and then curing the layer with light or heat. The compositions for forming a hard coating layer are not particularly limited and, for example, may include photocurable compounds and a photoinitiator.

As the photocurable compounds and the photoinitiator, those commonly used in the art can be used without limitation, for example, the photocurable compounds may be photopolymerizable monomers, photopolymerizable oligomers, etc., for example, may be monofunctional and/or multifunctional (meth) acrylate, and the photoinitiator may be an oxime ester-based photoinitiator, etc.

In addition to the variable transmittance optical stack, the present disclosure includes a smart window including the same. Furthermore, the present disclosure includes a vehicle in which the smart window is applied to at least one of front windows, rear windows, side windows, sunroof windows, and inner partitions, and a building window including the smart window.

**Mode for Invention**

Hereinbelow, an embodiment of the present disclosure will be described in detail. However, the present disclosure may not be limited to embodiments disclosed below and may be implemented in various shapes, and the embodiments merely ensure that the present disclosure of the present disclosure is complete and is provided to fully inform those skilled in the art of the scope of the invention, and may be defined by the scope of the claims.

**Examples and Comparative examples: manufacturing of the optical stack**

According to Table 1 as follows, the optical stacks are manufactured according to the examples and the comparative examples in which the liquid crystal layer driven by the VA mode is provided between two different polarizing plates with absorbing axes parallel to each other.

At this point, each absorbing axis is practically parallel to the MD of the polarizer, and the alignment axis of the liquid crystal layer and the optical axis of the retardation layer are values obtained when the absorbing axis of the polarizer is to 0°, in a planar direction.

[Table 1]

| | Alignment axis (°) of liquid crystal layer | Retardation layer | |
| --- | --- | --- | --- |
| | | In-plane retardation value (nm) | Optical axis (°) |
| Example 1 | 22 | 250 | 67 |
| Example 2 | 20 | 250 | 65 |
| Example 3 | 25 | 250 | 70 |
| Example 4 | 22 | 230 | 67 |
| Example 5 | 22 | 275 | 67 |
| Comparative example 1 | 45 | Not including | |
| Comparative example 2 | 20 | 250 | 69 |
| Comparative example 3 | 25 | 250 | 66 |
| Comparative example 4 | 22 | 220 | 67 |
| Comparative example 5 | 22 | 285 | 67 |

**Experimental example (1): Evaluation of the light blocking performance according to the optical axis of the retardation layer and the alignment axis of the liquid crystal layer**

After voltage is applied to the optical stack of the examples 1 to 3 and the comparative examples 1 to 3, a transmittance of each optical stack, and a color a* and a color b* in the light blocking mode are evaluated, and the evaluation results are shown in following Table 2.

[Table 2]

| | Light blocking mode | | |
|---|---|---|---|
| | Transmittance (%) | Color a* | Color b* |
| Example 1 | 0.02 | 3.2 | -3.6 |
| Example 2 | 0.03 | 3.4 | -3.2 |
| Example 3 | 0.03 | 4.4 | -6.5 |
| Comparative example 1 | 0.60 | 33.8 | -38.0 |
| Comparative example 2 | 0.81 | 10.3 | -6.7 |
| Comparative example 3 | 0.62 | -8.2 | 5.9 |

Referring to Table 2, in the optical stacks of the examples 1 to 3 in which an in-plane retardation value of the retardation layer is 250nm, the optical axis of the retardation layer and the alignment axis of the liquid crystal layer has a contained angle of 45°, a transmittance in the light blocking mode ranges from 0.02% to 0.03%, a color a* ranges from 3.2 to 4.4, and a color b* ranges from -3.2 to -6.5. However, in the optical stack of the comparative example without the retardation layer, a transmittance in the light blocking mode is 0.60%, a color a* is 33.8, a color b* is -38.0, and in the optical stacks of the comparative examples 2 and 3 in which each contained angle between the optical axis of the retardation layer and the alignment axis of the liquid crystal layer is 49° and 41°, even when an in-plane retardation value of the retardation layer is 250nm and equal to the examples 1 to 3, a transmittance in the light blocking mode is 0.81% and 0.62%, a color a* is 10.3 and -8.2, and a color b* is -6.7 and 5.9.

Therefore, as a contained angle between the optical axis of the retardation layer and the alignment axis of the liquid crystal layer ranges from 43° to 47°, the optical stack can have further improved light blocking performance in the light blocking mode.

**Experimental example (2): Evaluation of light blocking performance in response to an in-plane retardation value of the retardation layer**

After voltage is applied to the optical stack of the examples 1, 4, and 5 and the comparative examples 4 to 5, a transmittance of each optical stack, and a color a* and a color b* in the light blocking mode are evaluated, and the evaluation results are shown in following Table 3.

[Table 3]

| | Light blocking mode | | |
|---|---|---|---|
| | Transmittance (%) | Color a* | Color b* |
| Example 1 | 0.02 | 3.2 | -3.6 |
| Example 4 | 0.32 | 2.9 | -2.8 |
| Example 5 | 0.36 | 3.8 | -9.6 |
| Comparative example 4 | 0.65 | 2.9 | -2.8 |
| Comparative example 5 | 0.70 | 4.0 | -11.3 |

Referring to Table. 3, in the optical stacks of the examples 1, 4, and 5 in which the optical axis of the retardation layer and the alignment axis of the liquid crystal layer has a contained angle of 45° and an in-plane retardation value of the retardation layer ranges from 230nm to 275nm, a transmittance in the light blocking mode ranges from 0.02% to 0.36%, a color a* ranges from 2.9 to 3.8, a color b* ranges from -2.8 to -9.6.

However, in the optical stacks of the comparative examples 4 and 5 in which each in-plane retardation value of the retardation layer is 220nm, 285nm, even when a contained angle between the optical axis of the retardation layer and the alignment axis of the liquid crystal layer is 45° and equal to the examples 1, 4, and 5, a transmittance in the light blocking mode is 0.65%, and 0.70%, a color a* is 2.9 and 4.0, and a color b* is -2.8 and -11.3.

Therefore, as an in-plane retardation value of the retardation layer ranges from 230nm to 280nm, the optical stack can have further improved light blocking performance in the light blocking mode.

**Industrial Application**

The variable transmittance optical stack according to the present disclosure may have improved light blocking performance in the light blocking mode in comparison to the conventional optical stack by adjusting a retardation of the retardation layer.

**Claims**

1. A variable transmittance optical stack comprising:

   a first polarizing plate comprising a first polarizer;
   a first transparent conductive layer formed on one surface of the first polarizing plate;
   a second polarizing plate opposing the first polarizing plate, and comprising a second polarizer;
   a second transparent conductive layer formed on one surface of the second polarizing plate, and opposing the first transparent conductive layer; and
   a liquid crystal layer provided between the first transparent conductive layer and the second transparent conductive layer,
   wherein at least one polarizing plate of the first polarizing plate and the second polarizing plate comprises a retardation layer,
   an in-plane retardation value of the retardation layer ranges from 230 to 280nm, and
   an optical axis of the retardation layer has a contained angle ranging from 43° to 47°, with respect to an alignment axis of the liquid crystal layer.

2. The variable transmittance optical stack of claim 1, wherein the alignment axis of the liquid crystal layer has a contained angle ranging from 20° to 25°, with respect to an absorbing axis or a transmissive axis of at least one polarizer of the first polarizer and the second polarizer.

3. The variable transmittance optical stack of claim 1, wherein an absorbing axis of the first polarizer and an absorbing axis of the second polarizer are parallel to each other.

4. The variable transmittance optical stack of claim 1, wherein the liquid crystal layer is driven in a vertical alignment mode.

5. The variable transmittance optical stack of claim 1, wherein the retardation layer is formed on an inner surface of at least one polarizer of the first polarizer and the second polarizer.

6. The variable transmittance optical stack of claim 1, wherein at least one transparent conductive layer of the first transparent conductive layer and the second transparent conductive layer is formed by directly contacting with at least one polarizing plate of the first polarizing plate and the second polarizing plate.

7. The variable transmittance optical stack of claim 6, wherein at least one transparent conductive layer of the first transparent conductive layer and the second transparent conductive layer is formed by directly contacting with any one polarizing plate of the first polarizing plate and the second polarizing plate without an additional substrate between the polarizing plate and the transparent conductive layer.

8. The variable transmittance optical stack of claim 6, wherein at least one transparent conductive layer of the first transparent conductive layer and the second transparent conductive layer is formed by directly contacting with any one polarizing plate of the first polarizing plate and the second polarizing plate with a highly adhesive layer between the polarizing plate and the transparent conductive layer.

9. The variable transmittance optical stack of claim 1, wherein at least one transparent conductive layer of the first transparent conductive layer and the second transparent conductive layer comprises one or more types selected from a group consisting of transparent conductive oxide, metal, carbonaceous material, conductive polymers, conductive ink, and nanowires.

10. The variable transmittance optical stack of claim 1, wherein at least one polarizing plate of the first polarizing plate and the second polarizing plate comprises one or more types of functional layers selected from a group consisting of a protective layer and a refractive index-matching layer.

11. The variable transmittance optical stack of claim 1, wherein at least one polarizing plate of the first polarizing plate and the second polarizing plate has a thickness ranging from 30 to 200$\mu$m.

12. The variable transmittance optical stack of claim 1, wherein the liquid crystal layer comprises one or more types selected from a group consisting of a ball spacer and a column spacer.

13. The variable transmittance optical stack of claim 12, wherein the ball spacer has a diameter ranging from 1 to 10$\mu$m.

14. The variable transmittance optical stack of claim 12, wherein an occupancy area of the ball spacer in the liquid crystal layer ranges from 0.01 to 10% of the area of the liquid crystal layer.

15. The variable transmittance optical stack of claim 1, further comprising:
one or more types selected from a group consisting of an alignment film, a pressure sensitive adhesive/adhesive layer, an ultraviolet ray absorption layer, and a hard coating layer.

16. A manufacturing method for the variable transmittance optical stack of any one of claims 1 to 15.

17. A smart window comprising the variable transmittance optical stack of any one of claims 1 to 15.

18. A vehicle in which the smart window of claim 17 is applied to at least one of a front window, a rear window, a side window, a sunroof window, and an inner partition thereof.

19. A window and a door for a building comprising the smart window of claim 17.

FIG. 1

130 } 100-1
120 }
200-1
300
200-2
110 }
120 } 100-2
130 }

FIG. 2A

110
120
130

FIG. 2B

110
130
120
130

FIG. 2C

FIG. 3

a transmissive axis

an absorbing axis

120

FIG. 4A

FIG. 4B

FIG.5A

FIG. 5B

## INTERNATIONAL SEARCH REPORT

International application No.

**PCT/KR2022/014006**

### A. CLASSIFICATION OF SUBJECT MATTER

**G02F 1/137**(2006.01)i; **G02F 1/1337**(2006.01)i; **G02B 5/30**(2006.01)i

According to International Patent Classification (IPC) or to both national classification and IPC

### B. FIELDS SEARCHED

Minimum documentation searched (classification system followed by classification symbols)

G02F 1/137(2006.01); B32B 7/023(2019.01); B32B 7/12(2006.01); G02B 1/14(2015.01); G02B 5/30(2006.01); G02F 1/1335(2006.01); G06F 3/041(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 편광판(polarizing plate), 투명 도전층(transparent conductive layer), 액정층(liquid crystal layer), 위상차층(retardation layers), 광학 적층체(optical laminate), 투과율(penetration ratio)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0049688 A (LG CHEM, LTD.) 06 May 2021 (2021-05-06)<br>See paragraphs [0021], [0024], [0034], [0070]-[0071], [0126]-[0127], [0129] and [0131]; claim 15; and figure 1. | 1-19 |
| Y | KR 10-2003-0045773 A (NIPPON OIL CORPORATION) 11 June 2003 (2003-06-11)<br>See paragraphs [0012] and [0063]-[0064]; and figures 3-5. | 1-19 |
| Y | KR 10-2012-0067324 A (NITTO DENKO CORPORATION) 25 June 2012 (2012-06-25)<br>See paragraphs [0050], [0052] and [0157]; and figures 1 and 4. | 10-14 |
| Y | KR 10-2018-0097415 A (DONGWOO FINE-CHEM CO., LTD.) 31 August 2018 (2018-08-31)<br>See paragraphs [0087], [0097] and [0102]; and figure 5. | 15 |
| A | KR 10-2019-0096444 A (KONICA MINOLTA, INC.) 19 August 2019 (2019-08-19)<br>See paragraphs [0060]-[0064]; and figure 2. | 1-19 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 December 2022** | **16 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/014006**

| Patent document cited in search report | | | Publication date (day/month/year) | Patent family member(s) | | | Publication date (day/month/year) |
|---|---|---|---|---|---|---|---|
| KR | 10-2021-0049688 | A | 06 May 2021 | CN | 114341678 | A | 12 April 2022 |
| | | | | EP | 4050386 | A1 | 31 August 2022 |
| | | | | JP | 2022-545386 | A | 27 October 2022 |
| | | | | TW | 202134699 | A | 16 September 2021 |
| | | | | US | 2022-0299690 | A1 | 22 September 2022 |
| | | | | WO | 2021-080361 | A1 | 29 April 2021 |
| KR | 10-2003-0045773 | A | 11 June 2003 | CN | 1447928 | A | 08 October 2003 |
| | | | | CN | 1447928 | C | 30 April 2008 |
| | | | | EP | 1312945 | A1 | 21 May 2003 |
| | | | | EP | 1312945 | B1 | 08 February 2012 |
| | | | | JP | 2002-031717 | A | 31 January 2002 |
| | | | | KR | 10-0849300 | B1 | 29 July 2008 |
| | | | | US | 2003-0164921 | A1 | 04 September 2003 |
| | | | | US | 6977700 | B2 | 20 December 2005 |
| | | | | WO | 02-06863 | A1 | 24 January 2002 |
| KR | 10-2012-0067324 | A | 25 June 2012 | CN | 101876721 | A | 03 November 2010 |
| | | | | CN | 101876721 | B | 18 July 2012 |
| | | | | JP | 2010-243858 | A | 28 October 2010 |
| | | | | KR | 10-2010-0111619 | A | 15 October 2010 |
| | | | | TW | 201044035 | A | 16 December 2010 |
| | | | | TW | I437288 | B | 11 May 2014 |
| | | | | US | 2010-0253892 | A1 | 07 October 2010 |
| | | | | US | 8269928 | B2 | 18 September 2012 |
| KR | 10-2018-0097415 | A | 31 August 2018 | CN | 110325885 | A | 11 October 2019 |
| | | | | JP | 2020-512575 | A | 23 April 2020 |
| | | | | KR | 10-2019-0139193 | A | 17 December 2019 |
| | | | | KR | 10-2057065 | B1 | 18 December 2019 |
| | | | | TW | 201837671 | A | 16 October 2018 |
| | | | | TW | I704476 | B | 11 September 2020 |
| | | | | US | 2019-0383973 | A1 | 19 December 2019 |
| | | | | WO | 2018-155940 | A1 | 30 August 2018 |
| KR | 10-2019-0096444 | A | 19 August 2019 | CN | 107533253 | A | 02 January 2018 |
| | | | | CN | 107533253 | B | 02 February 2021 |
| | | | | JP | 6627869 | B2 | 08 January 2020 |
| | | | | KR | 10-2011587 | B1 | 16 August 2019 |
| | | | | KR | 10-2017-0125098 | A | 13 November 2017 |
| | | | | KR | 10-2057017 | B1 | 17 December 2019 |
| | | | | WO | 2016-181756 | A1 | 17 November 2016 |

Form PCT/ISA/210 (patent family annex) (July 2022)

**EP 4 411 471 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018010035 A